# EUROPÄISCHE PATENTANMELDUNG

(11) **EP 2 439 043 A1**
(43) Veröffentlichungstag der Anmeldung: **11.04.2012**
(21) Anmeldenummer: 10013438.6
(22) Anmeldetag: 08.10.2010
(51) Int. Cl.: B29C 45/44, B29C 45/73, B29C 33/04

(54) **Verfahren zur Kühlung eines Spritzgusswerkzeugs**

(71) Anmelder: ifw Manfred Otte GmbH, 4563 Micheldorf (AT)
(72) Erfinder: Kastner, Friedrich, 4710 Grieskirchen (AT); Demmel, Andreas, 4694 Ohlsdorf (AT)
(74) Vertreter: Ofner, Clemens

(57) **Zusammenfassung**

Die Erfindung betrifft ein Verfahren zur Kühlung in einem Spritzgusswerkzeug, dadurch gekennzeichnet, dass ein Kernschaft mit einer Hülse zum Kern verbunden wird und Kühlkanäle im Kernschaft und/oder in der Hülse situiert sind und/oder der Ziehring aus zwei Teilen besteht, die miteinander verbunden werden, wobei Kühlkanäle in den Ziehring eingebracht werden. Die Hülse besteht aus einem oder mehreren Teilen. Zusätzlich können Kühleinrichtungen in den Formplatten und/oder Einsätze des Spritzgusswerkzeugs vorgeehen sein, wobei diese Formplatten und /oder Einsätze aus einem oder mehreren Segmenten bestehen, wobei nur ein oder auch mehrere Segmente mit Kühlkanälen versehen sein können.

## Beschreibung

Die Erfindung betrifft ein Verfahren und eine Vorrichtung zur verbesserten Kühlung eines Spritzgusswerzeugs

Aus EP 2 140 995 A ist ein Verfahren zur Kühlung der Segmente eines Spreizkerns einer Spritzgießform bekannt, wobei der Ziehring und/oder die Segmente mit Kühlkanälen versehen werden und ein Kühlfluid durch diese Kühlkanäle geleitet wird.

Die Temperierung sollte vorteilhafterweise möglichst nahe am Formteil erfolgen. Gerade beim Spritzgießen von Hohlkörpern wie z.B. Rohrverbindern schwindet die Kunststoffmasse sehr schnell und schrumpft auf den Kern auf. Dadurch wird die Wärmeabfuhr an der äußeren Kavitätswandung verschlechtert und die in der Kunststoffmasse gespeicherte Wärmemenge vor allem über den Kern abgeführt.

In Zonen mit hohem Wärmeanfall, der beispielsweise durch die Geometrie des Bauteils bedingt sein kann, kann eine ausreichende Wärmemenge nicht abgeführt werden. Bei Verwendung hochlegierter Werkzeugstähle, die eine schlechte Wärmeleitung aufweisen, ist eine oberflächennahe Kühlung umso wichtiger. Die Kühlung muss möglichst nahe an das Objekt herangebracht werden.

Aufgabe der Erfindung war es ein Verfahren zur Kühlung in einem Spritzgusswerkzeug bereitzustellen, das im gesamten Bereich eine gleichmäßigere und an Wandanhäufungsstellen eine intensivere Kühlung gewährleistet. Dadurch kann die Produktionszeit eines Spritzlings, insbesondere eines Fittings deutlich verkürzt werden.

Gegenstand der Erfindung ist daher ein Verfahren zur Kühlung in einem Spritzgusswerkzeug, dadurch gekennzeichnet, dass ein Kernschaft mit einer Hülse zum Kern verbunden wird und Kühlkanäle im Kernschaft und/oder in der Hülse situiert sind und/oder der Ziehring aus zwei Teilen besteht, die miteinander verbunden werden, wobei Kühlkanäle in den Ziehring eingebracht werden.

Die Hülse kann ein- oder mehrteilig ausgeführt sein.

Da die Kühlung nicht nur über die kerne erfolgt, sondern auch über die Formplatten und/oder Einsatze, kann auch eine zusätzliche Kühlung dieser Bauteile vorgesehen sein.

Die Formplatten und/oder Einsätze können mehrteilig oder einteilig aufgebaut sein und mit nahe der Oberfläche liegenden Kühlkanälen versehen.

Die Verbindung der einzelnen Segmente der Formplatten und/oder Einsätze kann durch verschiedene Verfahren realisiert werden, beispielweise durch Verschraubung, Rast- oder Steckverbindung, Verklebung, Vakuumlöten, Löten, Aufschrumpfen, Verschweißen. Die Abdichtung erfolgt entweder durch die Verbindung selbst oder durch zusätzliche Abdichtungen wie O-Ringe, flächige elastische oder nichtelastische Dichtungen oder flüssige oder gelartige Dichtmassen. Die Kühlkanäle können nur in einem oder in mehreren Segmenten situiert sein.

Die Verbindung von Kernschaft und Hülse zum Kern kann durch verschiedene Verfahren realisiert werden, beispielweise durch Verschraubung, Rast- oder Steckverbindung, Verklebung, Vakuumlöten, Löten, Aufschrumpfen, Verschweißen. Die Abdichtung erfolgt entweder durch die Verbindung selbst oder durch zusätzliche Abdichtungen wie O-Ringe, flächige elastische oder nichtelastische Dichtungen oder flüssige oder gelartige Dichtmassen.

Die Kühlkanäle können im Kernschaft und/oder in der Hülse situiert sein. Dadurch kann die die Kühlung sehr nahe an der formgebenden Fläche erfolgen.

Der Ziehring kann aus zwei Teilen bestehen, die mittels Kleben, Schweißen, Löten, Verschraubung, Aufschrumpfung oder eines Vakuumfügeverfahrens miteinander verbunden werden.

In eine der beiden oder in beide Hälften wird ein Kühlkanal eingebracht.

Der Vorteil zum einteiligen Ziehring ist, dass Kühlungsgeometrien realisierbar sind, die bohrtechnisch nicht herstellbar wären.

Die Fertigung des Ziehrings kann auch mittels Rapid Tooling Verfahren wie z.B.: Lasercusing hergestellt werden

Eine weitere Möglichkeit die Wärme im Bereich von Masseanhäufungen (z.B. Verschneidungen bei Abzweigerfittings) abzuführen ist der Einsatz von hochwärmeleitfähigen Legierungen wie z.B. Bronze- und Messinglegierungen, die direkt oder indirekt mit dem Kühlmedium umspült werden.

Die Kühlkanäle können auch durch herkömmliche Verfahren wie Bohren, Fräsen, Drehen oder durch Rapid Tooling Verfahren und dergleichen hergestellt werden.

Als Kühlfluid kommen beispielsweise Flüssigkeiten wie Wasser, Öle, Glykolgemische, Emulsionen, komprimierte Gase oder unkomprimierte Gase wie z.B.: Luft, Stickstoff, CO₂ und dergleichen in Frage.

Dabei wird vorzugsweise ein gasförmiges vorgekühltes (z.B. an einem Kühlwasserkreislauf im Werkzeug oder einem Wärmetauscher) Medium (z. b. Luft, Stickstoff, CO2,...) durch das entsprechende Bauteil geleitet.

Die Kühlkanäle können auch so ausgeführt sein, dass ein komprimiertes Medium beim Austritt expandiert und somit noch tiefere Mediumtemperaturen erzeugt werden. Dies vergrößert den Temperaturunterschied und verbessert somit die Kühlung.

Unterstützend können zur weiteren Verbesserung der Kühlleistung die Komponenten des Kerns aus Materialien mit hoher Wärmeleitfähigkeit hergestellt sein. Des Weiteren können auch Wärmeleitstifte verbaut werden, die die Wärme von einem Punkt an einen anderen transportieren, wo eine Kühlung werkzeugtechnisch teilweise leichter realisierbar ist als direkt nahe an der formgebenden Fläche.

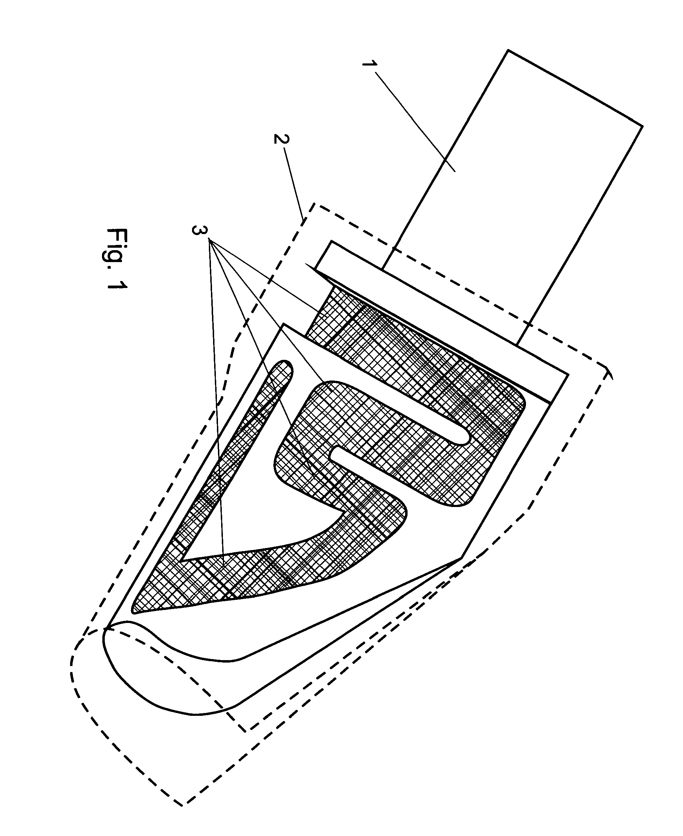

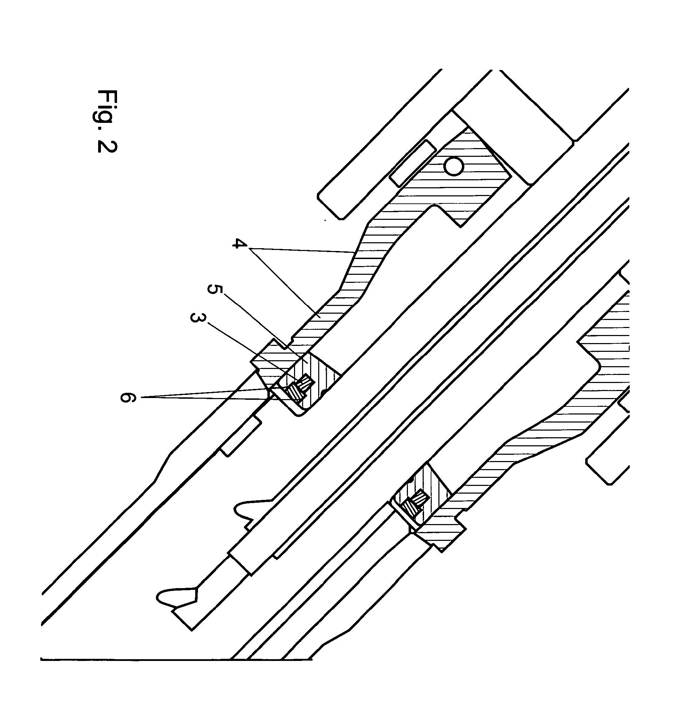

In den Figuren 1 und 2 sind die erfindungsgemäßen Ausführungsformen dargestellt.

In Figur 1 ist beispielhaft ein Kern eines Abzweigers bestehend aus einem Kernschaft 1 und einer darüberliegenden Hülse 2 dargestellt. Die Kühlkanäle 3 können im Kernschaft 1 oder in der Hülse 3 situiert sein.

Dadurch wird der Abstand der Kühlkanäle zur Oberfläche deutlich reduziert. Die Wärme wird dem Spritzgussteil schneller entzogen, die Produktionszeit kann somit deutlich verringert werden.

In Figur 2 ist ein zweiteiliger Ziehring dargestellt. Der Ziehring besteht aus zwei gegengleichen Hälften, in die Kühlkanäle 3 eingebracht werden.

4 bedeuten die Segmente, 5 den beweglichen Ziehring, 6 die Verklebung. Insbesondere bei kleinen Durchmessern ist dieser zweiteilige Aufbau von Vorteil, da die Kühlkanäle bei einteiliger Ausführung bei kleinen Dimensionen nicht herstellbar sind.

## Patentansprüche

1. Verfahren zur Kühlung in einem Spritzgusswerkzeug, **dadurch gekennzeichnet, dass** ein Kernschaft mit einer Hülse zum Kern verbunden wird und Kühlkanäle im Kernschaft und/oder in der Hülse situiert sind und/oder der Ziehring aus zwei Teilen besteht, die miteinander verbunden werden, wobei Kühlkanäle in den Ziehring eingebracht werden.

2. Verfahren nach Anspruch 1, **dadurch gekennzeichnet, dass** zusätzlich die Formplatten und Einsätze des Spritzgusswerkzeugs aus einem oder mehreren Segmenten bestehen, wobei Kühlkanäle in einem oder in mehreren Segmenten oberflächennahe situiert sind.

3. Verfahren nach Anspruch 1 oder 2, **dadurch gekennzeichnet, dass** die Kühlkanäle durch Bohren, Fräsen, Drehen, Lasercusen oder Rapid Tooling-Verfahren hergestellt sind.

4. Verfahren nach einem der Ansprüche 1 bis 3, **dadurch gekennzeichnet, dass** die Verbindung von Kernschaft und Hülse sowie der Segmente der Formplatten und/oder der Einsätze durch Rast- oder Steckverbindung, Verklebung, Vakuumlöten, Löten, Aufschrumpfen, Verschweißen erfolgt.

5. Verfahren nach Anspruch 4, **dadurch gekennzeichnet, dass** die Abdichtung entweder durch die Verbindung selbst oder durch zusätzliche Abdichtungen wie O-Ringe, flächige elastische oder nichtelastische Dichtungen oder flüssige oder gelartige Dichtmassen erfolgt.

6. Verfahren nach einem der Ansprüche 1 bis 5, **dadurch gekennzeichnet, dass** die Hülse aus einem oder mehreren Teilen besteht.

7. Verfahren nach einem der Ansprüche 1 bis 6, **dadurch gekennzeichnet, dass** die Verbindung der Teile des Ziehrings durch Kleben, Verschraubung, Löten, Aufschrumpfen, Schweißen oder Vakuumfügeverfahren erfolgt.

8. Verfahren nach Anspruch 7, **dadurch gekennzeichnet, dass** eine zusätzliche Abdichtung der Verbindung durch O-Ringe, flächige elastische oder nichtelastische Dichtungen oder flüssige oder gelartige Dichtmassen erfolgt.

9. Verfahren nach einem der Ansprüche 1 bis 8, **dadurch gekennzeichnet, dass** die Kühlkanäle in einer Hälfte des Ziehrings situiert sind.
